# EUROPEAN PATENT SPECIFICATION

(11) **EP 2 311 312 B1**
(45) Date of publication and mention of the grant of the patent: **09.10.2013**
(21) Application number: 10187382.6
(22) Date of filing: 13.10.2010
(51) Int. Cl.: A01J 27/04

(54) **Machine and method for processing a food product**
Maschine und Verfahren zur Verarbeitung eines Lebensmittelprodukts
Machine et procédé de traitement d'un produit alimentaire

(30) Priority: 13.10.2009 IT UD20090179
(43) Date of publication of application: 20.04.2011
(73) Proprietor: Gelmini, Antonio, 43030 Basilicanova Montechiarugolo (IT)
(72) Inventor: Gelmini, Antonio, 43030 Basilicanova Montechiarugolo (IT)
(74) Representative: Petraz, Gilberto Luigi

(56) References cited:
- WO-A1-2009/083485
- DE-A1-102008 061 330
- GB-A- 219 028
- US-A- 3 184 844
- US-A- 4 454 995
- US-A1- 2003 129 288

## Description

### FIELD OF THE INVENTION

The present invention concerns a machine and the relative method for processing, that is, for separating into small fragments, a food product such as for example fresh cheese, dairy products or other similar milk by-products, starting from pieces or slices of determinate size. In particular, the machine and method according to the present invention concern the stripping into fragments of the food product, preventing the formation of filaments and pulp after processing.

### BACKGROUND OF THE INVENTION

It is known that, in order to reduce a food product, for example a soft food product such as for example fresh cheese, dairy products or other similar milk by-products, to fragments of small or very small size, automatic or semiautomatic machines are used, provided with a mincing tool, against which a piece or slice of the food product to be processed is thrust. See for example document US 4 454 995 A.

Normally, the mincing tool comprises at least a drum formed by a curved metal sheet provided with holes with ridged radial tips, so as to perform a grating action on the cheese.

Although it guarantees satisfactory results with hard food products, such as for example mature cheeses, the known drum has various disadvantages when used for soft or tender food products.

This is because the action of the radial tips against such soft food products, due to the conformation of such products, instead of breaking the surface and forming small grains, scrapes the surface, generating filaments of the product, which stay partly attached to the radial tips, forming a pulp and not a granular mass.

Apart from the fact that this is not the desired result, the pulp is then deposited partly in the mechanical components of the machine, causing malfunctions thereof.

Furthermore, the action of the radial tips produces a wrenching of the food product, causing an overheating of the product, making it even more difficult to fragment it into small grains.

Purpose of the present invention is to achieve a machine, and to perfect a method, for processing a food product, in particular a soft food product, which guarantee the fragmentation of the product without forming filaments of product, and prevent the product, once minced, from remaining attached to the tools.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, a machine for processing a food product according to the present invention comprises at least a processing station suitable to fragment into a desired form a determinate compact mass of food product, and provided with a fragmentation tank into which the mass of food product is fed, and at least a fragmentation tool mounted inside the fragmentation tank and movable at least in one cutting direction, in which it chops into fragments the mass of food product.

According to a characteristic feature of the present invention, the fragmentation tool comprises one or more cutting members, for example blades, curved for example like a hook, having relative cutting edges facing concordant with the cutting direction of the fragmentation tool.

The conformation of the cutting members is such as to effect a cutting action on the mass of food product, which determines the formation of flakes, or thin slivers, of food product, so that the product is substantially reduced to flakes.

Moreover, the curved conformation of the cutting members, together with the speed of movement of the fragmentation tool, is such that turbulent currents are generated between the tool and the flake or sliver of food product, so that the latter, as soon as it is cut, is immediately thrust outside the cutting member, and discharged from the fragmentation tool.

The sudden thrusting action generated by the turbulent currents ensures that the flakes or slivers do not remain attached to the fragmentation tool after cutting, preventing the formation of filaments and pulp of food product.

Therefore, the fragmentation machine according to the present invention allows to effectively reduce into fragments even soft food products, such as fresh cheese, dairy products or other milk by-products, which are not fragmented efficiently with normal mincing techniques.

Furthermore, the flaking action, together with the turbulent currents, causes a reduction in temperature during the cutting steps, thus further promoting the discharge of the flakes.

According to the invention, the fragmentation tool comprises a cylinder or drum, mounted rotatable inside the fragmentation tank.

In this solution the cutting members are disposed longitudinally on the external surface of the cylinder and have their relative cutting edges facing concordant with the direction of rotation of the cylinder

This solution allows to further improve the fragmentation action, allowing the flakes or slivers of food product to rapidly detach from the cutting members, in particular with soft food products such as fresh cheeses, dairy products or other milk by-products.

According to a variant, the cutting members are substantially parallel to the axis of rotation of the cylinder.

According to another variant the cutting members have a determinate angle of inclination with respect to the axis of rotation of the cylinder.

According to a variant the cutting members extend along the whole length of the cylinder.

According to another variant the cutting members have a plurality of notches on their length, able to define an equal number of interruptions to the cutting edge. The notches define cutting segments of a determinate width, which determine the width of the flakes or slivers produced in the fragmentation step.

According to a variant, the machine also comprises a slicing tool disposed downstream of the fragmentation tool and inside the fragmentation tank, to further fragment the flakes or slivers produced, and to guarantee a substantially uniform and desired granulometry.

According to another variant, the machine according to the invention has at least a transfer pipe, by means of which the minced food product is transported to subsequent operating stations, for example packing or other.

According to another variant, blowing members are associated with the fragmentation tank, in order to blow in a gas and to create inside it a substantially saturated atmosphere, so as to keep the fragmented food product in a controlled atmosphere, which prevents the proliferation of noxious bacteria and microorganisms, and therefore to guarantee the food product is packaged in the best aseptic conditions.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a three-dimensional view of a machine for processing a food product according to the present invention;
- fig. 2 is a lateral section view of the machine in fig. 1;

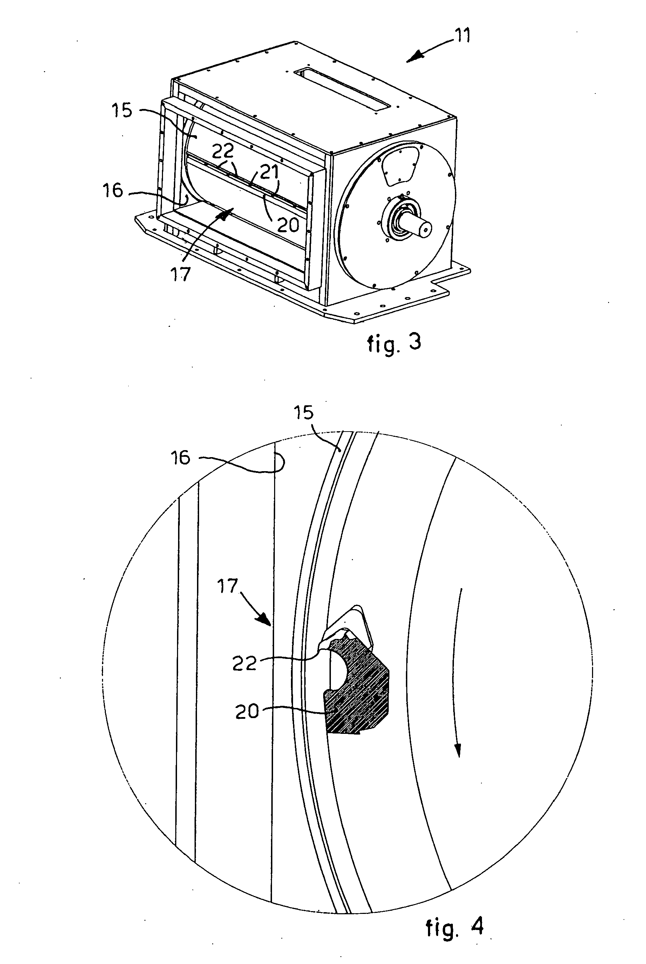

- fig. 3 is an enlarged view of a detail of the machine in fig. 2;
- fig. 4 shows schematically a further enlarged and sectioned detail of fig. 3, in an operating step;
- fig. 5 shows a variant of the machine in fig. 1;
- fig. 6 shows a lateral section view of the machine in fig. 5.

To facilitate comprehension, the same reference numbers have been used, where possible, to identify common elements in the drawings that are substantially identical. It is understood that elements and characteristics of one form of embodiment can conveniently be incorporated into other forms of embodiment without further clarifications.

### DETAILED DESCRIPTION OF A PREFERENTIAL FORM OF EMBODIMENT

With reference to the attached drawings, a machine 10 according to the present invention is able to mince a determinate mass of food product, in this case fresh cheese, to produce fragments of the cheese to be packaged in a "grated" condition.

The machine 10 according to the present invention comprises a fragmentation station 11, downstream of which a transfer pipe 12 is disposed, able to transport the fragmented cheese to a subsequent operating station, for example sieving, packing or other.

In particular, the fragmentation station 11 is suitable to perform a fragmentation step, in which a plurality of pieces or slices of cheese, or whole cheeses, are fragmented as desired.

The fragmentation station 11 comprises a loading pipe 13, through which the pieces or slices of cheese or whole cheeses to be fragmented are introduced, a fragmentation drum 15 mounted rotary in a fragmentation tank 16 and provided externally with cutting members 17, and a funnel 19 to discharge the fragmented cheese, open toward the transfer pipe 12.

The speed of rotation of the fragmentation drum 15 is selectively managed and commanded electronically by means of an electric component, for example an inverter, according to specific commands set or settable by means of a command and control console, not shown here.

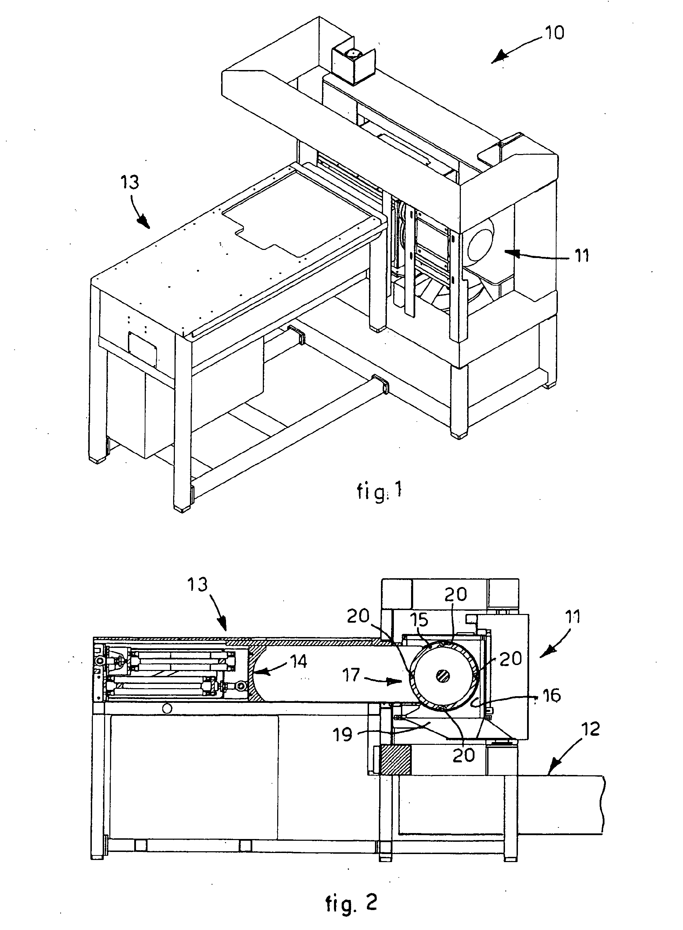

In the fragmentation station 11, the pieces or slices or whole cheeses are introduced through the loading pipe 13 into the fragmentation tank 16, and are pressed, according to the embodiment shown in figs. 1 and 2, by means of a thrust actuator 14, against an external surface of the fragmentation drum 15, so as to make a plurality of fragments of the desired shape and granulometry, according to the sizes and shape of the cutting members 17.

The intensity of the action of the thrust actuator 14 is able to be selectively regulated, for example according to the type of cheese or the sizes of the fragments to be made. The regulation can be carried out both manually and also automatically.

According to a variant, the pieces or slices or whole cheeses are loaded continuously. Loading can be carried out manually, and a store of pieces or slices or whole cheeses can be provided, disposed upstream of the loading pipe 13.

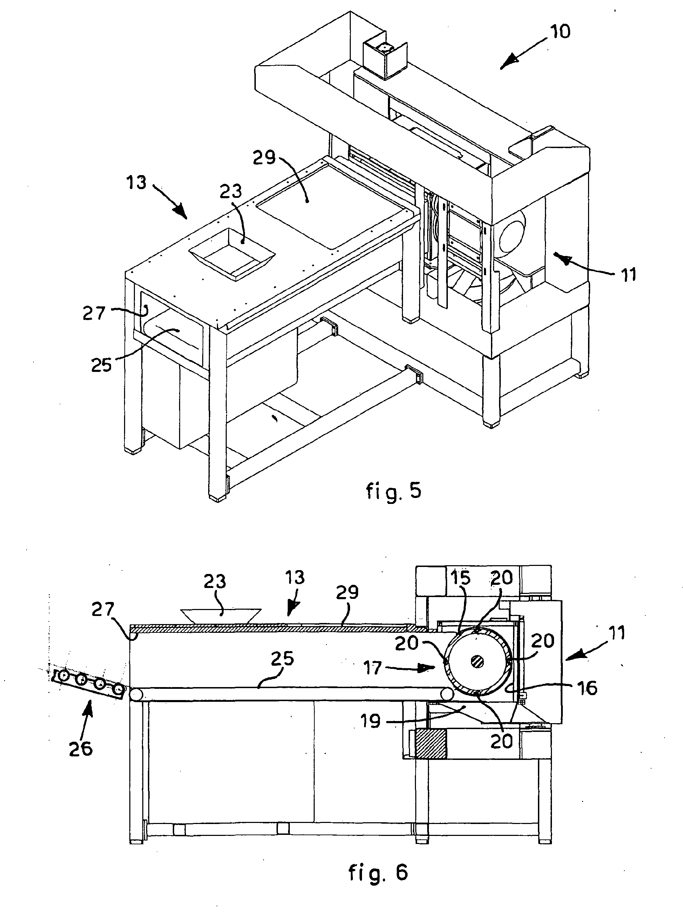

In the form of embodiment shown in figs. 5 and 6, the pieces or slices are introduced through a hopper 23 inside the loading pipe 13 and from here are fed by means of a conveyor belt 25 against an external surface of the fragmentation drum 15. In this form of embodiment the whole cheeses are fed through a roller unit 26, directly into the loading pipe 13 through a rear aperture 27.

Advantageously, this form of embodiment provides an inspection door 29, through which it is possible to access inside the loading pipe 13, for example to simplify the maintenance operations.

This form of embodiment allows to feed the food product substantially continuously to the fragmentation drum 15, reducing downtimes to a minimum and increasing the productivity of the machine 10.

According to the invention, the cutting members 17 comprise a plurality of cutting blades 20 disposed substantially longitudinal on the external surface of the fragmentation drum 15.

In this case, the cutting blades 20 are disposed substantially parallel to the axis of rotation of the fragmentation drum 15, but it cannot be excluded that, according to a variant not shown here, the cutting blades 20 can be inclined with respect to the axis of rotation of the fragmentation drum 15 by a determinate lateral rake angle.

The cutting blades 20 extend over the whole length of the external surface of the fragmentation drum 15 and have a plurality of notches 21 at suitable intervals on the length of the cutting blade 20, so as to define corresponding cutting segments 22.

The width of each cutting segment 22 defines the size and granulometry of the fragment of food product made.

Each cutting blade 20 also comprises an arched cross section, substantially like a hook, and conformed so as to keep the relative cutting segments 22 facing concordant with the direction of rotation of the fragmentation drum 15.

In this way, due to the effect of the rotation of the fragmentation drum 15 and the thrust with which the cheese is kept against the fragmentation drum 15, the cutting segments each make a cut on the cheese, making corresponding flakes or slivers of cheese.

The arched shape of the cutting blades 20, together with the speed of rotation of the fragmentation drum 15, causes the formation of turbulent currents in the arched part of the cutting blade.

The turbulent currents limit the heating of the cutting blade 20 during the cutting steps and generate a thrust on the flake or sliver toward the outside of the cutting blade 20.

In this way the flake or sliver made is immediately discharged from the cutting blade 20 and from the fragmentation drum 15, preventing the flake or sliver from staying attached to the cutting segment 22.

The flakes or slivers of cheese thus produced fall both due to the action of the thrust generated by the turbulent currents and also due to gravity, through the funnel 19, and enter the transfer pipe 12.

The transfer pipe 12 comprises for example a screw, or other similar typical transport member, onto which the flakes or slivers of cheese progressively fall.

In the solution with the screw, there is another thrusting action on the flakes or slivers, produced by taking them quickly toward the successive processing stations, preventing the flakes or slivers from sticking to each other as they are deposited.

According to a variant, not shown, the fragmentation station 11 of the machine 10 comprises, inside the fragmentation tank 16 itself, both the fragmentation drum 15 and also a slicing roller disposed downstream of the fragmentation drum 15.

For example, the slicing roller has a circular external surface provided with a plurality of blades that shred and crumble the flakes or slivers of cheese made by the fragmentation drum 15, reducing the granulometry thereof and making them uniform.

According to another variant, the machine 10 according to the invention according to the invention can be integrated with or in any case associated with a sterile packing apparatus of a known type, or so-called "clean room", where the food product is packed in extremely sterile and aseptic conditions.

It also comes within the field of the present invention to provide that the machine 10 can be applied with equal effectiveness for the processing and fragmentation of hard cheeses.

It is clear, however, that modifications and/or additions of parts or steps may be made to the machine 10 and method as described heretofore, without departing from the field and scope of the present invention.

For example, it comes within the field of the present invention to provide a plurality of nozzles disposed, with respect to the fragmentation tank 16, so as to deliver inert gas in correspondence with the fragmentation drum 15 and/or the possible slicing roller.

It also comes within the field of the present invention to provide that the cutting blades 20, instead of extending over the length of the fragmentation drum 15, are distributed in a desired manner on the circular external surface of the fragmentation drum 15.

It also comes within the field of the present invention to provide that the cutting blades 20 are mounted on a flat fragmentation element, that is, not drum-shaped, which has an alternative linear or substantially linear motion with respect to the cheese so as to make the flakes or slivers.

It is also clear that, although the present invention has been described with reference to some specific examples, a person of skill in the art shall certainly be able to achieve many other equivalent forms of machine and method for mincing a food product, having the characteristics as set forth in the claims and hence all coming within the field of protection defined thereby.

## Claims

1. Machine for processing a food product, comprising at least a fragmentation station (11) suitable to fragment in a desired shape a determinate compact mass of food product, and provided with a fragmentation tank (16) into which the mass of food product is fed, and at least a fragmentation tool (15) mounted inside said fragmentation tank (16) and movable at least in a cutting direction, in which it carries out a fragmentation action on the mass of food product, wherein said fragmentation tool comprises a cylinder or drum (15), mounted rotatable inside said fragmentation tank (16) and provided with one or more cutting members (17) with a curved shape and having relative cutting edges (22), wherein said cutting members (17) comprise a plurality of blades (20) disposed longitudinally on the external surface of said cylinder or drum (15), each blade (20) having an arched cross section defining a substantially hooked conformation, said blades (20) having the relative cutting edges (22) facing concordant with the direction of rotation of the cylinder or drum (15), said machine further comprising an electric component configured to selectively manage and command a speed of rotation of the cylinder or drum (15) effective for generating turbulent currents in the arched part of the blades (20).

2. Machine as in claim 1, **characterized in that** said blades (20) are disposed substantially parallel to the axis of rotation of said cylinder or drum (15).

3. Machine as in claim 1, **characterized in that** said blades (20) have a determinate angle of inclination with respect to the axis of rotation of said cylinder or drum (15).

4. Machine as in any claim hereinbefore, **characterized in that** said blades (20) extend along the whole length of the cylinder or drum (15).

5. Machine as in any claim hereinbefore, **characterized in that** said cutting members (20) have a plurality of notches (21) along their length, able to define an equal number of interruptions of the relative cutting edges (22).

6. Machine as in any claim hereinbefore, **characterized in that** it also comprises a slicing tool disposed downstream of said cylinder or drum (15) and inside said fragmentation tank (16), in order to carry out a further fragmentation of the food product.

7. Machine as in any claims hereinbefore, **characterized in that** said electronic component is an inverter.

8. Machine as in any claims hereinbefore, **characterized in that** it comprises blowing members associated with the fragmentation tank (16) configured too blow in an inert gas and to create inside said fragmentation tank (16) a substantially saturated atmosphere.

9. Machine as in any claims hereinbefore, **characterized in that** said fragmentation station (11) comprises a loading pipe (13), through which the food product to be fragmented is introduced.

10. Machine as in claim 9, **characterized in that** said loading pipe (13) comprises a thrust actuator (14) configured to press, in a selectively regulated manner according to the type of food product or the sizes of the fragments to be made, the food product to be fragmented against an external surface of the cylinder or drum (15), so as to make a plurality of fragments of the desired shape and granulometry, according to the sizes and shape of the cutting members (17).

11. Machine as in claim 9, **characterized in that** said loading pipe (13) comprises a conveyor belt (25) to feed the food product to be fragmented along the loading pipe (13) and against an external surface of the cylinder or drum (15), a hopper (23) through which the food product in the form of pieces or slices is able to be introduced inside the loading pipe (13) and a rear aperture (27) in cooperation with a roller unit (26) trough which the whole food product is able to be fed, directly into the loading pipe (13).

12. Method for processing a food product, using a machine comprising at least a fragmentation station (11) suitable to fragment in a desired shape a determinate compact mass of food product, and provided with a fragmentation tank (16) into which the mass of food product is fed, and at least a fragmentation tool (15) mounted inside said fragmentation tank (16) and movable at least in a cutting direction, in which it carries out a fragmentation action on the mass of food product, **characterized in that** it provides:
- fragmenting the mass of food product by means of one or more blades (20) provided on a cylinder or drum (15) of said fragmentation tool, mounted rotatable inside said fragmentation tank (16), which blades (20) have a curved shape and have relative cutting edges (22) and are disposed longitudinally on the external surface of said cylinder or drum (15) and have the relative cutting edges (22) facing concordant with the direction of rotation of the cylinder or drum (15),
- limiting the heating of the blades (20) during the cutting steps by causing turbulent currents in the arched part of the blades (20) selecting a desired speed of rotation of said cylinder or drum (15) effective for generating said turbulent currents by means of an electronic component,
- generating a thrust on the flake or sliver toward the outside of the blades (20) by means of said turbulent currents,
- immediately discharging the flake or sliver made from the blades (20) and from the cylinder or drum (15), preventing the flake or sliver from staying attached to the cutting edges (22).

## Patentansprüche

1. Maschine zur Verarbeitung eines Lebensmittelprodukts, aufweisend zumindest eine Fragmentierstation (11), welche zum Fragmentieren einer bestimmten kompakten Masse von Lebensmittelprodukt in eine gewünschte Form geeignet ist und versehen ist mit einem Fragmentierbehälter (16), in welchen die Masse von Lebensmittelprodukt eingespeist wird, und mit zumindest einem Fragmentierwerkzeug (15), welches innerhalb des Fragmentierbehälters (16) montiert und zumindest in eine Schneidrichtung bewegbar ist, in welche es eine Fragmentiertätigkeit an der Masse von Lebensmittelprodukt ausführt, wobei das Fragmentierwerkzeug (15) aufweist einen Zylinder oder eine Trommel (15), welcher/welche innerhalb des Fragmentierbehälters (16) drehbar montiert ist und versehen ist mit einem oder mehr Schneidelementen (17) mit einer gekrümmten Form und relative Schneidkanten (22) aufweisend, wobei die Schneidelemente (17) aufweisen eine Mehrzahl von Klingen (20), welche longitudinal an der äußeren Fläche des Zylinders oder der Trommel (15) angeordnet ist, wobei jede Klinge (20) einen bogenförmigen Querschnitt aufweist, welcher eine im Wesentlichen hakenförmige Gestalt definiert, wobei die Klingen (20) aufweisen die relativen Schneidkanten (22), welche übereinstimmend mit der Drehrichtung des Zylinders oder der Trommel (15) zugewandt sind, wobei die Maschine ferner aufweist eine elektrische Komponente, welche konfiguriert ist, um eine Drehzahl des Zylinders oder der Trommel (15), welche effektiv zum Erzeugen von turbulenten Strömungen in dem bogenförmigen Teil der Klingen (20) ist, selektiv zu verwalten und zu befehligen.

2. Maschine gemäß Anspruch 1, **dadurch gekennzeichnet, dass** die Klingen (20) im Wesentlichen parallel zur Drehachse des Zylinders oder der Trommel (15) angeordnet sind.

3. Maschine gemäß Anspruch 1, **dadurch gekennzeichnet, dass** die Klingen (20) einen bestimmten Neigungswinkel in Bezug auf die Drehachse des Zylinders oder der Trommel (15) aufweisen.

4. Maschine gemäß einem der vorhergehenden Ansprüche, **dadurch gekennzeichnet, dass** die Klingen (20) sich entlang der gesamten Länge des Zylinders oder der Trommel (15) erstrecken.

5. Maschine gemäß einem der vorhergehenden Ansprüche, **dadurch gekennzeichnet, dass** die Schneidelemente (20) eine Mehrzahl von Aussparungen (21) entlang ihrer Länge aufweisen, welche in der Lage sind, eine gleiche Anzahl von Unterbrechungen der relativen Schneidkanten (22) zu definieren.

6. Maschine gemäß einem der vorhergehenden Ansprüche, **dadurch gekennzeichnet, dass** sie auch aufweist ein Schneidwerkzeug, welches dem Zylinder oder der Trommel (15) nachgeschaltet und innerhalb des Fragmentierbehälters (16) angeordnet ist, um eine weitere Fragmentierung des Lebensmittelprodukts auszuführen.

7. Maschine gemäß einem der vorhergehenden Ansprüche, **dadurch gekennzeichnet, dass** die elektronische Komponente ein Inverter ist.

8. Maschine gemäß einem der vorhergehenden Ansprüche, **dadurch gekennzeichnet, dass** sie aufweist Blaselemente, welche mit dem Fragmentierbehälter (16) verbunden sind und zum Einblasen eines Inertgases und zum Erzeugen einer im Wesentlichen gesättigten Atmosphäre innerhalb des Fragmentierbehälters (16) konfiguriert ist.

9. Maschine gemäß einem der vorhergehenden Ansprüche, **dadurch gekennzeichnet, dass** die Fragmentierstation (11) ein Laderohr (13), durch welches das zu fragmentierende Lebensmittelprodukt eingeführt wird.

10. Maschine gemäß Anspruch 9, **dadurch gekennzeichnet, dass** das Laderohr (13) einen Schubantrieb (14) aufweist, um in einer selektiv regulierten Weise gemäß dem Typ des Lebensmittelprodukts oder den Größen der herzustellenden Fragmente das zu fragmentierende Lebensmittelprodukt gegen eine äußere Fläche des Zylinders oder der Trommel (15) zu drücken, um eine Mehrzahl von Fragmenten der gewünschten Form und Korngrößenverteilung gemäß den Größen und der Form der Schneidelemente (17) herzustellen.

11. Maschine gemäß Anspruch 9, **dadurch gekennzeichnet, dass** das Laderohr (13) aufweist ein Förderband (25) zum Einspeisen des zu fragmentierenden Lebensmittelprodukts entlang des Laderohres (13) und gegen eine äußere Fläche des Zylinders oder der Trommel (15), einen Trichter (23), durch welchen ermöglicht wird, dass das Lebensmittelprodukt in der Form von Stücken oder Scheiben in das Innere des Laderohres (13) eingeführt wird, und eine hintere Öffnung (27) in Zusammenwirkung mit einer Rolleneinheit (26), durch welche ermöglicht wird, dass das gesamte Lebensmittelprodukt direkt in das Laderohr (13) eingespeist wird.

12. Verfahren zum Verarbeiten eines Lebensmittelprodukts unter Verwendung einer Maschine, welche aufweist zumindest eine Fragmentierstation (11), welche zum Fragmentieren einer bestimmten kompakten Masse von Lebensmittelprodukt in eine gewünschte Form geeignet ist und versehen ist mit einem Fragmentierbehälter (16), in welchen die kompakte Masse von Lebensmittelprodukt eingespeist wird, und mit zumindest einem Fragmentierwerkzeug (15), welches innerhalb des Fragmentierbehälters (16) montiert und zumindest in eine Schneidrichtung bewegbar ist, in welche es eine Fragmentiertätigkeit an der Masse von Lebensmittelprodukt ausführt, **dadurch gekennzeichnet, dass** es bereitstellt:
- Fragmentieren der Masse von Lebensmittelprodukt mittels einer oder mehrerer Klingen (20), welche an einem Zylinders oder einer Trommel (15) des Fragmentierwerkzeugs vorgesehen sind, welcher/welche drehbar innerhalb des Fragmentierbehälters (16) montiert ist, wobei die Klingen (20) eine gekrümmte Form und relative Schneidkanten (22) aufweisen und longitudinal an der äußeren Fläche des Zylinders oder der Trommel (15) angeordnet sind und die relativen Schneidkanten (22) aufweisen, welche übereinstimmend mit der Drehrichtung des Zylinders oder der Trommel (15) zugewandt sind,
- Begrenzen der Aufheizung der Klingen (20) während der Schneidschritte durch Verursachen von turbulenten Strömungen in dem bogenförmigen Teil der Klingen (20) durch Auswählen einer gewünschten Drehzahl des Zylinders oder der Trommel (15), welche effektiv zum Erzeugen der turbulenten Strömungen, mittels einer elektronischen Komponente,
- Erzeugen eines Schubs auf den Span oder den Splitter nach außerhalb der Klingen (20) mittels der turbulenten Strömungen,
- Sofortiges Entnehmen des Spans oder des Splitters, welche von den Klingen (20) und dem Zylinder oder der Trommel (15) hergestellt werden, Verhindern des Haftenbleibens des Spans oder des Splitters an den Schneidkanten (22).

## Revendications

1. Machine de traitement d'un produit alimentaire comprenant au moins une station de fragmentation (11) apte à fragmenter dans une forme souhaitée une masse compacte déterminée de produit alimentaire, et pourvue d'un réservoir de fragmentation (16) dans lequel la masse de produit alimentaire est alimentée, et au moins un outil de fragmentation (15) monté à l'intérieur dudit réservoir de fragmentation (16) et pouvant être déplacé au moins dans un sens de découpe dans lequel il effectue une action de fragmentation sur la masse de produit alimentaire, dans laquelle ledit outil de fragmentation comprend un cylindre ou tambour (15), monté de manière à pouvoir tourner à l'intérieur dudit réservoir de fragmentation (16) et pourvu d'un ou plusieurs organes de découpe (17) avec une forme incurvée et comportant des bords de découpe relatifs (22), dans laquelle lesdits organes de découpe (17) comprennent une pluralité de lames (20) disposées longitudinalement sur la surface externe dudit cylindre ou tambour (15), chaque lame (20) ayant une coupe transversale arquée définissant une conformation sensiblement en crochet, lesdites lames (20) ayant les bords de découpe relatifs (22) se faisant face de manière concordante avec le sens de rotation du cylindre ou tambour (15), ladite machine comprenant en outre un composant électrique configuré pour gérer et commander sélectivement une vitesse de rotation du cylindre ou tambour (15) efficace pour générer des courants turbulents dans la partie arquée des lames (20).

2. Machine selon la revendication 1, **caractérisée en ce que** lesdites lames (20) sont disposées sensiblement parallèlement à l'axe de rotation dudit cylindre ou tambour (15).

3. Machine selon la revendication 1, **caractérisée en ce que** lesdites lames (20) ont un angle d'inclinaison déterminé par rapport à l'axe de rotation dudit cylindre ou tambour (15).

4. Machine selon l'une quelconque des revendications précédentes, **caractérisée en ce que** lesdites lames (20) s'étendent sur toute la longueur du cylindre ou tambour (15).

5. Machine selon l'une quelconque des revendications précédentes, **caractérisée en ce que** lesdits organes de découpe (20) comportent une pluralité de crans (21) le long de leur longueur, aptes à définir un nombre égal d'interruptions des bords de découpe relatifs (22).

6. Machine selon l'une quelconque des revendications précédentes, **caractérisée en ce qu'**elle comprend également un outil de tranchage disposé en aval dudit cylindre ou tambour (15) et à l'intérieur dudit réservoir de fragmentation (16), afin d'effectuer une fragmentation supplémentaire du produit alimentaire.

7. Machine selon l'une quelconque des revendications précédentes, **caractérisée en ce que** ledit composant électronique est un onduleur.

8. Machine selon l'une quelconque des revendications précédentes, **caractérisée en ce qu'**elle comprend des organes de soufflage associés au réservoir de fragmentation (16) configurés pour souffler un gaz inerte et pour créer une atmosphère sensiblement saturée à l'intérieur dudit réservoir de fragmentation (16).

9. Machine selon l'une quelconque des revendications précédentes, **caractérisée en ce que** ladite station de fragmentation (11) comprend un tuyau de chargement (13) à travers lequel le produit alimentaire à fragmenter est introduit.

10. Machine selon la revendication 9, **caractérisée en ce que** ledit tuyau de chargement (13) comprend un actionneur de poussée (14) configuré pour presser, d'une manière sélectivement régulée en fonction du type de produit alimentaire ou des tailles des fragments à constituer, le produit alimentaire à fragmenter contre une surface externe du cylindre ou tambour (15), de manière à constituer une pluralité de fragments de la forme souhaitée et de la granulométrie souhaitée, en fonction des tailles et de la forme des organes de découpe (17).

11. Machine selon la revendication 9, **caractérisée en ce que** ledit tuyau de chargement (13) comprend un tapis roulant (25) pour alimenter le produit alimentaire à fragmenter le long du tuyau de chargement (13) et contre une surface externe du cylindre ou tambour (15), une trémie (23) à travers laquelle le produit alimentaire sous la forme de morceaux ou de tranches est apte à être introduit à l'intérieur du tuyau de chargement (13) et une ouverture arrière (27) en coopération avec une unité de rouleau (26) à travers laquelle le produit alimentaire complet est apte à être alimenté directement dans le tuyau de chargement (13).

12. Procédé de traitement d'un produit alimentaire, en utilisant une machine comprenant au moins une station de fragmentation (11) apte à fragmenter dans une forme souhaitée une masse compacte déterminée de produit alimentaire, et pourvue d'un réservoir de fragmentation (16) dans lequel la masse de produit alimentaire est alimentée, et au moins un outil de fragmentation (15) monté à l'intérieur dudit réservoir de fragmentation (16) et pouvant être déplacé au moins dans un sens de découpe dans lequel il effectue une action de fragmentation sur la masse de produit alimentaire, **caractérisé en ce qu'**il effectue :
- la fragmentation de la masse de produit alimentaire au moyen d'une ou plusieurs lames (20) fournies sur un cylindre ou tambour (15) dudit outil de fragmentation, monté de manière à pouvoir tourner à l'intérieur dudit réservoir de fragmentation (16), lesdites lames (20) ayant une forme incurvée, comportant des bords de découpe relatifs (22) et étant disposées longitudinalement sur la surface externe dudit cylindre ou tambour (15), les bords de découpe relatifs (22) se faisant face de manière concordante avec le sens de rotation du cylindre ou tambour (15),
- la limitation de l'échauffement des lames (20) au cours des étapes de découpe en provoquant des courants turbulents dans la partie arquée des lames (20) en sélectionnant une vitesse de rotation souhaitée dudit cylindre ou tambour (15) efficace pour générer lesdits courants turbulents au moyen d'un composant électronique,
- la génération d'une poussée sur le flocon ou l'éclat vers l'extérieur des lames (20) au moyen desdits courants turbulents,
- l'évacuation immédiate du copeau ou de l'éclat des lames (20) et du cylindre ou tambour (15), en empêchant que le flocon ou l'éclat ne reste attaché aux bords de découpe (22).
